# EUROPÄISCHE PATENTANMELDUNG

(11) **EP 0 643 919 A1**
(43) Veröffentlichungstag der Anmeldung: **22.03.1995**
(21) Anmeldenummer: 94114393.5
(22) Anmeldetag: 13.09.1994
(51) Int. Cl.: A22C 11/00

(54) **Verfahren und Vorrichtung zur Enthäutung von Lebensmittelprodukten**

(30) Priorität: 14.09.1993 DE 4331205
(71) Anmelder: BIFORCE Anstalt, FL-9490 Vaduz (LI)
(72) Erfinder:
(74) Vertreter: Finsterwald, Manfred, Dipl.-Ing., Dipl.-Wirtsch.-Ing.

(57) **Zusammenfassung**

Es werden ein Verfahren und eine Vorrichtung zum maschinellen Ablösen der Umhüllung bzw. Haut von block- oder stangenförmigen Lebensmitteln (1) beschrieben, wobei ein Produktzipfel zum Teil abgeschnitten und zusammen mit der Umhüllung bzw. Haut ergriffen und an einer Wickelwelle (14,15) fixiert wird. Anschließend wird unter gleichzeitigem Wirksamwerden eines Hautritzmessers (5) die Umhüllung bzw. Haut streifenförmig und unter Drehung und Längsverschiebung des Lebensmittelproduktes abgezogen und auf eine Wickelwelle gewickelt.

## Beschreibung

Die Erfindung betrifft ein Verfahren zum Entfernen der Umhüllung von aufzuschneidenden, zumindest im wesentlichen stangen- oder blockförmigen Lebensmittelprodukten, insbesondere zum Enthäuten von Würsten, sowie eine Vorrichtung zur Durchführung dieses Verfahrens.

Aus der EP 0 509 477 A1 ist ein Verfahren zum maschinellen Ablösen der Haut von block- oder stangenförmigen Lebensmitteln mittels einer Schälmaschine bekannt, wobei die Haut aufgetrennt, im Bereich der Trennlinie festgehalten und durch eine mechanische Zugbewegung vom Lebensmittel abgelöst wird. Insbesondere erfolgt dabei die Auftrennung der Haut in Längsrichtung des Lebensmittels, und die Zugbewegung ist dabei quer oder schräg zur Trennlinie gerichtet. Zur Realisierung dieses Verfahrens ist eine beispielsweise als mechanische Greifvorrichtung ausgebildete Haltevorrichtung vorgesehen, die zur Vermeidung der Rißgefahr beim Ablösen der Haut als Saugvorrichtung ausgebildet ist, um auf diese Weise die Haltekräfte gleichmäßig und über eine größere Länge bzw. Fläche verteilt einwirken zu lassen und somit einen punktförmigen Angriff der jeweiligen Haltekraft zu vermeiden.

Dieses bekannte Verfahren und die zugehörige Vorrichtung sind in der praktischen Handhabung relativ aufwendig und erfordern aufgrund des jeweils vorzunehmenden Längsschnittes und des erforderlichen Ergreifens der Haut beidseitig dieses Längsschnittes eine individuelle Anpassung zwischen Produkt und der zur Durchführung des Enthäutungsverfahrens vorgesehenen Vorrichtung, und außerdem ist die anzustrebende Funktionssicherheit schwer zu erreichen, da ein sicheres Ergreifen und Halten der beiderseits des Längsschnitts gelegenen Hautbereiche problematisch ist.

Aufgabe der Erfindung ist es daher, ein Verfahren und eine Vorrichtung der eingangs genannten Art zu schaffen, das besonders einfach und weitgehend unabhängig von der jeweiligen Produktform und Produktgröße durchführbar ist und sich mittels einer betriebssicheren, konstruktiv vergleichsweise einfachen Vorrichtung realisieren läßt, so daß ein störungsfreier, vollautomatischer Betrieb gewährleistet werden kann.

Gelöst wird diese Aufgabe entsprechend dem das Verfahren betreffenden Teil der Erfindung dadurch, daß an einem Produktende ein die geschlossene Umhüllung öffnender, die Bildung eines mit der Umhüllung noch zusammenhängenden Produktzipfels bewirkender Schnitt durchgeführt wird, daß der Produktzipfel und die mit ihm noch in Verbindung stehende Umhüllung ergriffen und an einer Wickelwelle fixiert wird, daß die Wickelwelle in eine zur Längsachse des Produkts spitzwinkelig verlaufende Lage gebracht und ein die Umhüllung ritzendes oder schneidendes Messer an dem Lebensmittelprodukt derart zur Anlage gebracht wird, daß dann, wenn die Wickelwelle in Drehung versetzt wird, die Umhüllung streifenförmig und unter Drehung und Längsverschiebung des Lebensmittelproduktes abgezogen und auf die Wickelwelle gewickelt wird.

Durch die Vermeidung eines zum Auftrennen der Umhüllung bzw. Haut erforderlichen Längsschnittes und das gezielte streifenförmige Abziehen der Umhüllung bzw. der Haut von dem Lebensmittelprodukt wird eine weitestgehende Unabhängigkeit des Enthäutungsvorgangs von Form und Größe bzw. Länge des jeweiligen Produkts erhalten und sichergestellt, daß dieses Enthäutungsverfahren mittels einer einfach aufgebauten Vorrichtung schnell und zuverlässig, wie es für automatische Vorgänge erforderlich ist, durchgeführt werden kann.

Eine bevorzugte Ausführungsform einer Vorrichtung zur Durchführung des Verfahrens nach der Erfindung zeichnet sich aus durch eine vorzugsweise geneigt ausgebildete Auflage für das zu enthäutende Produkt, ein im Bereich des in Förderrichtung vorderen Endes der Auflage vorgesehenes Anschnittmesser, eine Elemente zum Ergreifen und Halten eines mittels des Anschnittsmessers teilweise vom Produkt abgetrennten Produktzipfels aufweisende Wickeleinheit, die zwischen einer zum Zeitpunkt des Beginns des jeweiligen Enthäutungsvorgangs im Bereich des Anschnittmessers und vor dem Produkt gelegenen Erfassungsposition und einer bezüglich des Produktes seitlichen Wickelposition sowie einer Hautablageposition verschwenk- und verfahrbar gelagert ist, und einem Hautritzmesser, das bei sich in der Wickelposition befindender Wickeleinheit zur Bildung von Wickel-Hautstreifen schneidend am Produkt anliegt.

Da das Anschnittmesser jeweils nur einen kleinen Teil des Produktendes, das heißt im Falle des Enthäutens einer Wurst den Produktzipfel, teilweise abtrennen muß und der Zusammenhang dieses abgetrennten Teils mit dem Produkt über die Haut erhalten bleibt, läßt sich dieser Produktzipfen einfach, sicher und schnell ergreifen, wobei nach Verschwenken der Wickeleinheit, an der der Produktzipfel festgeklemmt ist, unterstützt durch das Hautritzmesser das kontinuierliche Abziehen des Wickel-Hautstreifens erfolgen kann. Dieser Abziehvorgang geht unter Drehen des Produkts vor sich, bis das Produktende erreicht und das gesamte Produkt einwandfrei enthäutet ist. Anschließend kann die Wickeleinheit über einen Behälter verschwenkt und die aufgewickelte Hülle bzw. Haut abgestreift und in dem betreffenden Behälter gesammelt werden.

Bevorzugt weist die Wickeleinheit einen motorisch angetriebenen Greif- und Wickelzylinder auf, der aus zwei exzentrisch zueinander gelagerten und relativ zueinander zwischen zwei Positionen verdrehbaren Teilzylinderschalen besteht, wobei in der einen Position zwischen den beiden Teilzylinderschalen ein die Erfassung eines Produktzipfels gewährleistender Öffnungsspalt vorliegt und in der anderen Position der Öffnungsspalt unter Ausbildung einer Produktzipfel-Klemmstelle geschlossen ist. Die beiden Teilzylinderschalen erstrecken sich zweckmäßigerweise jeweils über einen Bereich von etwa 180° und weisen unterschiedliche Radien auf.

Die Einrichtung zur relativen Verdrehung von Welle und Hülsenanordnung und damit zur Steuerung der Schließ- und Öffnungsbewegung der beiden Teilzylinderschalen, besteht zweckmäßigerweise aus einem Kniehebelsystem, das über eine Bolzen-Klinkenanordnung zwischen einer abgewinkelten, der Spaltöffnungsstellung der Teilzylinderschalen entsprechenden Position und einer gestreckten Totpunktstellung umsteuerbar ist, in der sich die Teilzylinderschalen in der Klemmstellung befinden.

Weitere besonders vorteilhafte Merkmale und Ausgestaltungen der Erfindung sind in den Unteransprüchen angegeben und werden anhand des nachfolgend beschriebenen Ausführungsbeispiels unter Bezugnahme auf die Zeichnung erläutert; in der Zeichnung zeigt:
- Figur 1: eine schematische Seitenansicht einer erfindungsgemäßen Vorrichtung zum maschinellen Ablösen der Haut von einer Wurst,
- Figur 2: eine Draufsicht der Vorrichtung nach Figur 1,
- Figur 3: eine schematische Längsschnitt-Darstellung der Wickeleinheit der Vorrichtung nach den Figuren 1 und 2,
- Figur 4: eine schematische Schnittansicht entsprechend der Linie E-F in Figur 3,
- Figur 5: eine schematische Schnittansicht entsprechend der Linie C-D in Figur 3, und
- Figur 6: eine schematische Schnittansicht entsprechend der Linie A-B in Figur 3.

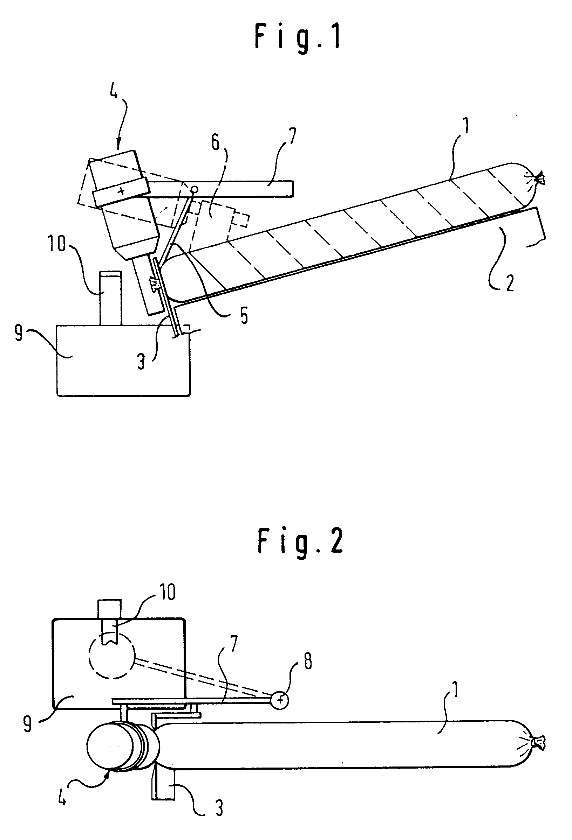

Figur 1 zeigt eine zu enthäutende Wurst 1, die auf einer schrägen Auflage 2 angeordnet ist, wobei diese Schrägauflage 2 nicht unbedingt erforderlich ist, jedoch den Vorgang des Ablösens der Haut nach dem erfindungsgemäßen Verfahren begünstigen kann.

Im Bereich ihres vorderen Endes stößt die Wurst 1 in der gezeigten Stellung gegen eine Wickeleinheit 4, welche auf diese Weise die gegebenenfalls seitlich geführte Wurst 1 positioniert, so daß mittels eines Anschnittmesses 3 ein vorderer Wurstzipfel zum Teil abgetrennt werden kann. Dazu wird das Anschnittmesser 3 zum Beispiel mittels eines Betätigungszylinders schräg von oben nach unten bewegt.

Die Wickeleinheit 4, die in den Figuren 1 und 2 mit ausgezogenen Linien in der Anschnittposition dargestellt ist, kann nach erfolgtem Teilabtrennen des vorderen Wurstzipfels mittels geeigneter Führungs- und Betätigungseinrichtungen in die in Figur 1 gestrichelt gezeigte Position überführt werden, in der die Achse der Wickeleinheit 4 mit der Längsachse des Produktes einen spitzen Winkel einschließt.

Dieses Überführen in die in Figur 1 gestrichelt gezeichnete Position erfolgt jedoch erst nach dem Ergreifen des Wurstzipfels und damit der abzulösenden Haut durch die Wickeleinheit 4, wobei im Verlauf des Verschwenkvorgangs ein Hautritzmesser 5 relativ zu dem Produkt 1 derart verschwenkt wird, daß es am Produkt bzw. der Wurst 1 unter einer solchen Vorspannung bzw. unter einem solchen Druck anliegt, daß die abzulösende Haut geritzt oder in der Weise eingeschnitten wird, daß im wesentlichen ohne Hinterlassen einer Schnittspur auf dem Produkt 1 die Haut definiert in Form von Hautstreifen 6 abgezogen werden kann, wenn die Wickeleinheit in Drehung versetzt wird.

Dieser nach Art einer Schraubenlinie sich ausbildende Hautablösevorgang wird bis zum Ende des Produktes 1 durchgeführt, wobei während des Aufwickelns des Hautstreifens 6 auf die Wickeleinheit die Wurst aufgrund des Wickelvorgangs unter Drehung in Axialrichtung bewegt bzw. gefördert wird, bis der Ablösevorgang beendet ist.

Nach Beendigung des Hautablösevorgangs kann die Wickeleinheit 4 über einen Schwenkhebel 7 um eine Achse 8 über einen Behälter 9 geschwenkt werden, der mit einem Abstreifer 10 versehen ist. Durch Relativbewegung der Wickeleinheit 4 bezüglich des Abstreifers 10 kann nach vorheriger Lösung der Wurstzipfelklemmung an der Wickeleinheit die abgelöste Haut abgestreift werden, so daß sie in den Behälter 9 fällt.

Alle erforderlichen Bewegungen der Wickeleinheit 4, des Anschnittmessers 3 und des Hautritzmessers 5 werden über entsprechende Führungen und Zylinder-Kolbenanordnungen gesteuert.

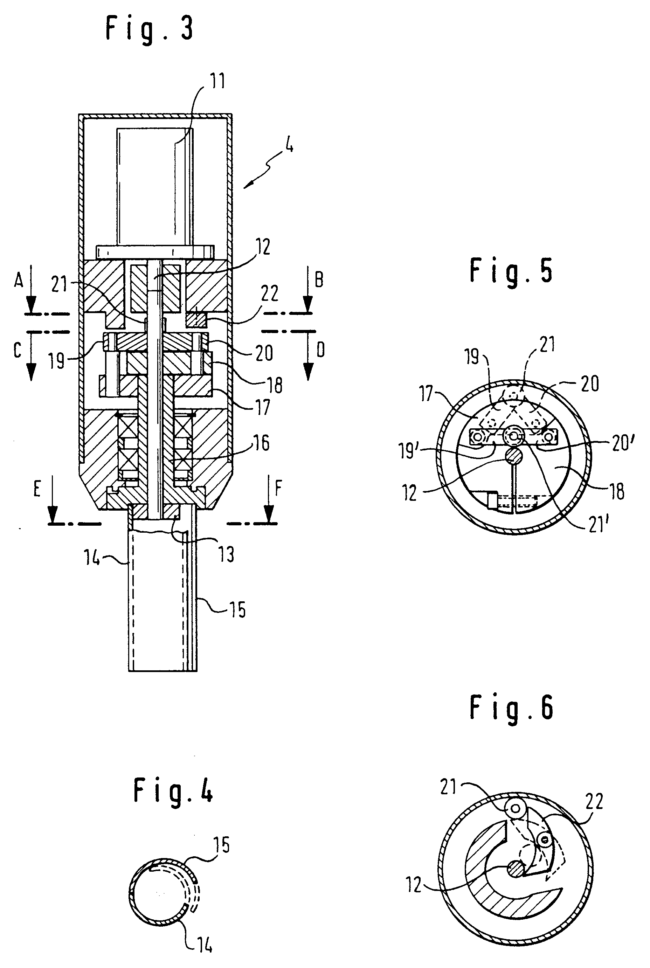

Die Figuren 3 bis 6 zeigen verschiedene Schnittansichten einer bevorzugten Ausführungsform einer Wickeleinheit 4.

In einem geschlossenen Gehäuse weist die Wickeleinheit 4 im Bereich eines Gehäuseendes einen Antriebsmotor 11 auf, dessen Abtriebswelle 12 über ein Zwischenstück 13 mit einer Teilzylinderschale 14 fest verbunden ist, die eine vorgebbare axiale Länge und einen Radius aufweist, der einen Bruchteil ihrer axialen Länge darstellt. Diese Teilzylinderschale erstreckt sich über etwa 180° und ist bezüglich einer zweiten Teilzylinderschale 15, die sich ebenfalls über etwa 180° erstreckt und gleiche Länge wie die Teilzylinderschale 14 aufweist, exzentrisch angeordnet. Der Radius der mit der Abtriebswelle 12 verbundenen Teilzylinderschale 14 ist kleiner als der Radius der Teilzylinderschale 15, die fest mit einer Hülsenanordnung 16 verbunden ist, welche ebenfalls über den Motor 11 angetrieben wird.

Dieser Antrieb erfolgt über eine mit der Hülsenanordnung 16 fest verbundene Scheibe 17, die über einen Verbindungsbolzen mit einer Kniehebelanordnung 19, 20 verbunden ist, welche ihrerseits über eine mit der Abtriebswelle 12 drehfest verbundene Scheibe und einen Kupplungsbolzen in Drehung versetzt wird.

Die Kniehebelanordnung 19, 20 ermöglicht in Abhängigkeit von der Drehrichtung des Antriebsmotors 11 eine Relativverdrehung von Welle 12 und Hülsenanordnung 16 und damit auch eine Relativverdrehung der exzentrisch zueinander gelegenen Teilzylinderschalen 14, 15. Diese Relativverdrehung zwischen den Teilzylinderschalen 14, 15 entspricht einer Öffnungs- bzw. einer Schließstellung dieser eine Klemm- und Wickeleinrichtung darstellenden Zylinderschalenanordnung, das heißt in der Öffnungsstellung sind die beiden Teilzylinderschalen 14, 15 so gegeneinander verdreht, daß der teilabgetrennte Wurstzipfel durch das Drehen der Anordnung in den offenen Spalt zwischen den beiden Teilzylinderschalen gelangt und bei Fortsetzung der Drehung in gleicher Richtung dann die beiden Teilzylinderschalen so gegeneinander verdreht und in der erreichten neuen Position blockiert werden, daß der Wurstzipfel eindeutig festgeklemmt ist und daraufhin das Abziehen der Haut in Streifenform nach erfolgter Verschwenkung der Wickeleinheit 4 erfolgen kann.

Bei einem Drehen in Gegenrichtung werden die beiden Teilzylinderschalen 14, 15 wieder in ihre Ausgangslage zurückgebracht, das heißt die Klemmung des Wurstzipfels wird aufgehoben, die beiden Teilzylinderschalen erreichen ihre Öffnungsstellung, und die aufgewickelte Wursthaut kann abgestreift werden.

Die Schnittansicht entsprechend Figur 4 zeigt in ausgezogenen Linien die vorstehend geschilderte Öffnungsstellung und in gestrichelten Linien die Schließstellung dieser von den beiden Teilzylinderschalen gebildeten Erfassungs-, Klemm- und Wickelanordnung.

Die in Figur 5 gezeigte Schnittansicht entsprechend der Linie C-D in Figur 3 verdeutlicht die beiden jeweiligen Endstellungen der Kniehebelanordnung 19, 20. In strichlierter Form ist die Öffnungsstellung angedeutet, in der sich der die beiden Hebel 19, 20 verbindende Bolzen 21 radial außen in der Nähe des Gehäuses der Wickeleinheit 4 befindet und demgemäß der Verdrehwinkel zwischen der abtriebswellenfesten Scheibe 18 und der mit der Hülsenanordnung 16 drehfest verbundenen Scheibe 17 ein Minimum ist.

Mit durchgezogenen Linien ist die Kniehebelanordnung in der stabilen Totpunktlage gezeigt, wobei die beiden Hebel 19', 20' relativ zueinander gestreckt sind und der Verbindungsbolzen 21' benachbart der Welle 12 gelegen ist. In dieser Position sind die beiden Scheiben 17, 18 maximal zueinander verdreht und die exzentrisch zueinander gelagerten Teilzylinderschalen 14, 15 befinden sich dabei in der Klemmposition.

Figur 6 zeigt die zur Umsteuerung der Kniehebelanordnung 19, 20 verwendete Mechanik, die aus einer am Gehäuse schwenkbar gelagerten Klinke 22 besteht, die zweiarmig ausgebildet ist und deren einer Arm zur Welle 12 hin durch Federkraft vorgespannt ist, so daß sie die in Figur 6 mit durchgezogenen Linien gezeigte Position einnimmt, wenn der mit ihr zusammenwirkende Bolzen 21 die gehäusenahe Position einnimmt. Wird der Motor 11 im Uhrzeigersinn in Drehung versetzt, das heißt wird der Vorgang des Erfassens und Festklemmens des teilabgetrennten Wurstzipfels in Gang gesetzt, dann stößt der Bolzen 21 gegen die Klinke 22 und wird von dieser Klinke radial nach innen geführt, wobei die Klinke in die in Figur 6 strichliert gezeigte Position verschwenkt wird, wenn sich der Bolzen 21 in der inneren Endposition befindet und - wie in Figur 5 gezeigt - die Kniehebelanordnung die gestreckte Position mit den durchgezogen gezeichneten Hebeln 19', 20' einnimmt.

Wird nach Beendigung des Hautablösevorgangs der Motor in Gegenrichtung angetrieben, dann bewegt sich der Bolzen 21 aus seiner inneren Position wiederum geführt durch die Klinke 22 nach außen und in seine gehäusenahe Position, wodurch die Klemmung des Wurstzipfels aufgehoben wird und die Teilzylinderschalen 14, 15 in die Öffnungsstellung gelangen.

Die aufgewickelte Wursthaut kann dann abgestreift und in den Behälter abgeworfen werden, worauf dann der nächste Enthäutungsvorgang in der beschriebenen Weise durchgeführt werden kann.

### Bezugszeichenliste

- 1: Wurst
- 2: Auflage
- 3: Anschnittmesser
- 4: Wickeleinheit
- 5: Hautritzmesser
- 6: Hautstreifen
- 7: Schwenkhebel
- 8: Schwenkachse
- 9: Behälter
- 10: Abstreifer
- 11: Motor
- 12: Abtriebswelle
- 13: Zwischenstück
- 14: Kleine Teilzylinderschale
- 15: Große Teilzylinderschale
- 16: Hülsenanordnung
- 17: Hülsenfeste Scheibe
- 18: Drehachsenfeste Scheibe
- 19: Erster Hebel
- 20: Zweiter Hebel
- 21: Bolzen
- 22: Klinke

## Patentansprüche

1. Verfahren zum Entfernen der Umhüllung von aufzuschneidenden, zumindest im wesentlichen stangen- oder blockförmigen Lebensmittelprodukten, insbesondere zum Enthäuten von Würsten,
dadurch **gekennzeichnet,**
daß an einem Produktende ein die geschlossene Umhüllung öffnender, die Bildung eines mit der Umhüllung noch zusammenhängenden Produktzipfels bewirkender Schnitt durchgeführt wird,
daß der Produktzipfel und die mit ihm noch in Verbindung stehende Umhüllung ergriffen und an einer Wickelwelle fixiert wird,
daß die Wickelwelle in eine zur Längsachse des Produkts spitzwinkelig verlaufende Lage gebracht und ein die Umhüllung ritzendes oder schneidendes Messer an dem Lebensmittelprodukt derart zur Anlage gebracht wird,
daß dann, wenn die Wickelwelle in Drehung versetzt wird, die Umhüllung streifenförmig und unter Drehung und Längsverschiebung des Lebensmittelproduktes abgezogen und auf die Wickelwelle gewickelt wird.

2. Vorrichtung zur Durchführung des Verfahrens nach Anspruch 1,
**gekennzeichnet** durch
eine vorzugsweise geneigt ausgebildete Auflage (2) für das zu enthäutende Produkt (1),
ein im Bereich des in Förderrichtung vorderen Endes der Auflage (2) vorgesehenes Anschnittmesser (3),
eine Elemente (14, 15) zum Ergreifen und Halten eines mittels des Anschnittsmessers (3) teilweise vom Produkt (1) abgetrennten Produktzipfels aufweisende Wickeleinheit (4),
die zwischen einer zum Zeitpunkt des Beginns des jeweiligen Enthäutungsvorgangs im Bereich des Anschnittmessers (3) und vor dem Produkt (1) gelegenen Erfassungsposition und einer bezüglich des Produktes (1) seitlichen Wickelposition sowie einer Hautablageposition verschwenk- und verfahrbar gelagert ist, und
einem Hautritzmesser (5), das bei sich in der Wickelposition befindender Wickeleinheit (4) zur Bildung von Wickel-Hautstreifen (6) schneidend am Produkt (1) anliegt.

3. Vorrichtung nach Anspruch 2,
dadurch **gekennzeichnet,**
daß die Wickeleinheit (4) in der Erfassungsposition für das Produkt (1) einen Anschlag bildet.

4. Vorrichtung nach Anspruch 2 oder 3,
dadurch **gekennzeichnet,**
daß an der Hautablageposition ein mit einem Abstreifer (10) versehener Behälter (9) vorgesehen ist.

5. Vorrichtung nach einem der Ansprüche 2 bis 4,
dadurch **gekennzeichnet,**
daß die Wickelachse der Wickeleinheit (4) in der Wickelposition mit der Längsachse des Produkts (1) einen spitzen Winkel einschließt.

6. Vorrichtung nach einem der Ansprüche 2 bis 5,
dadurch **gekennzeichnet,**
daß das Hautritzmesser (5) zusammen mit der Wickeleinheit (4) verschwenk- und verfahrbar ist.

7. Vorrichtung nach Anspruch 6,
dadurch **gekennzeichnet,**
daß das Hautritzmesser (5) bei sich in der Wickelposition befindender Wickeleinheit (4) unter Federvorspannung an dem Produkt (1) angreift.

8. Vorrichtung nach einem der Ansprüche 2 bis 7,
dadurch **gekennzeichnet,**
daß die Wickeleinheit (4) einen motorisch angetriebenen Greif- und Wickelzylinder aufweist, der aus zwei exzentrisch zueinander gelagerten und relativ zueinander zwischen zwei Positionen verdrehbaren Teilzylinderschalen (14, 15) besteht, wobei in der einen Position zwischen den beiden Teilzylinderschalen (14, 15) ein die Erfassung eines Produktzipfels gewährleistender Öffnungsspalt vorliegt und in der anderen Position der Öffnungsspalt unter Ausbildung einer ProduktzipfelKlemmstelle geschlossen ist.

9. Vorrichtung nach Anspruch 8,
dadurch **gekennzeichnet,**
daß die beiden Teilzylinderschalen (14, 15) aus sich jeweils über einen Bereich von etwa 180° erstreckenden Zylinderschalen bestehen und unterschiedliche Radien aufweisen.

10. Vorrichtung nach Anspruch 8 oder 9,
dadurch **gekennzeichnet,**
daß die axiale Länge der Teilzylinderschalen (14, 15) ein Mehrfaches des jeweiligen Radius beträgt.

11. Vorrichtung nach einem der Ansprüche 8 bis 10,
dadurch **gekennzeichnet,**
daß die einen geringeren Durchmesser aufweisende, innenliegende Zylinderhalbschale (14) direkt oder über ein Zwischenstück (13) fest mit der Motor-Antriebswelle (12) verbunden ist, und daß die einen größeren Durchmesser aufweisende Zylinderhalbschale (15) fest mit einer die Antriebswelle (12) umschließenden Hülsenanordnung (16) verbunden ist, und daß zwischen der Antriebswelle (12) und der Hülsenanordnung (16) eine Einrichtung zur relativen Verdrehung von Welle (12) und Hülsenanordnung (16) vorgesehen ist, welche zu Beginn der Drehbewegung und bei Drehrichtungsumkehr wirksam ist.

12. Vorrichtung nach Anspruch 11,
dadurch **gekennzeichnet,**
daß die Einrichtung zur relativen Verdrehung von Welle (12) und Hülsenanordnung (16) aus einem Kniehebelsystem (19, 20) besteht, das über eine Bolzen-Klinkenanordnung (21, 22) zwischen einer abgewinkelten, der Spaltöffnungsstellung der Teilzylinderschalen (14, 15) entsprechenden Position und einer gestreckten Totpunktstellung umsteuerbar ist, in der sich die Teilzylinderschalen (14, 15) in der Klemmstellung befinden.

13. Vorrichtung nach Anspruch 12,
dadurch **gekennzeichnet,**
daß der mit dem Knickpunkt der Kniehebelanordnung (19, 20) verbundene Bolzen (21) bei Drehbeginn des Motors (11) durch eine schwenkbar am Gehäuse der Wickeleinheit (4) gelagerte, unter Federvorspannung stehende Klinke (22) in eine achsnahe Totpunktstellung umgelenkt wird.

14. Vorrichtung nach einem der vorhergehenden Ansprüche,
dadurch **gekennzeichnet,**
daß der eine Hebel (2) der Kniehebelanordnung (19, 20) schenkbar über eine drehachsenfeste Scheibe (18) mit der Antriebswelle (12) und der andere Hebel (20) der Kniehebelanordnung (19, 20) schwenkbar mit einer mit der Hülsenanordnung (16) fest verbundenen Scheibe (17) verbunden ist.

15. Vorrichtung nach einem der vorhergehenden Ansprüche,
dadurch **gekennzeichnet,**
daß die Kniehebelanordnung (19, 20) dem Antriebsmotor (11) benachbart angeordnet ist und daß die beiden Verbindungsscheiben (17, 18) unterhalb der Kniehebelanordnung (19, 20) gelegen sind.
